# EUROPÄISCHE PATENTSCHRIFT

(11) **EP 1 240 739 B1**
(45) Veröffentlichungstag und Bekanntmachung des Hinweises auf die Patenterteilung: **02.03.2005**
(21) Anmeldenummer: 00993562.8
(22) Anmeldetag: 18.12.2000
(51) Int. Cl.: H04J 3/06

(54) **VERFAHREN UND EINRICHTUNG ZUM SYNCHRONISIEREN EINES MOBILFUNKEMPFÄNGERS MIT EINER ZEITSCHLITZSTRUKTUR EINES EMPFANGENEN FUNKSIGNALS**
METHOD AND DEVICE FOR SYNCHRONISING A MOBILE RADIO RECEIVER WITH A FRAME STRUCTURE OF A RADIO SIGNAL
PROCEDE ET DISPOSITIF DE SYNCHRONISATION D'UN RECEPTEUR MOBILE AVEC UNE STRUCTURE TRAME D'UN SIGNAL RADIO

(30) Priorität: 20.12.1999 DE 19961557
(43) Veröffentlichungstag der Anmeldung: 18.09.2002
(73) Patentinhaber: Infineon Technologies AG, 81669 München (DE)
(72) Erfinder: BECKER, Burkhard, 85737 Ismaning (DE); JUNG, Peter, 67697 Otterberg (DE); PLECHINGER, Jörg, 80469 München (DE); SCHNEIDER, Michael, 81541 München (DE); DOETSCH, Markus, CH-3098 Schliern (CH); KELLA, Tideya, 80337 München (DE); SCHMIDT, Peter, 67158 Ellerstadt (DE)
(74) Vertreter: Lange, Thomas, Dr.
(86) Internationale Anmeldenummer: PCT/DE2000/004522
(87) Internationale Veröffentlichungsnummer: WO 2001/047140

(56) Entgegenhaltungen:
- EP-A- 0 789 467
- EP-A- 0 804 002
- US-A- 4 847 877
- US-A- 5 526 297
- US-A- 5 883 929

## Beschreibung

Verfahren und Einrichtung zum Synchronisieren eines Mobilfunkempfängers mit einer Zeitschlitzstruktur eines empfangenen Funksignals

Die Erfindung betrifft ein Verfahren zum Synchronisieren eines Mobilfunkempfängers mit einer Zeitschlitzstruktur eines von einer Basisstationen erhaltenen Funksignals sowie eine Zeitschlitz-Synchronisationseinrichtung für einen Mobilfunkempfänger.

Zum Betrieb eines Mobilfunksystems ist eine zeitliche Synchronisierung zwischen Basisstation und Mobilstation erforderlich. Dabei werden zwei Formen der Synchronität unterschieden: Die Frequenzsynchronität und die Zeitschlitzsynchronität. Die Erfindung betrifft ausschließlich die Zeitschlitzsynchronität. Die Zeitschlitzsynchronisierung erfolgt auf der Abwärtsstrecke, d.h. von der Basisstation (Sender) zu der Mobilstation (Empfänger). Zeitschlitzsynchronität bedeutet, daß die Mobilstation eine in der Basisstation verwendete zeitliche Einteilung des gesendeten Datenstroms im empfangenen Funksignal erkennt (d.h. zeitlich richtig erfaßt), wodurch sowohl eine Zeitschlitz-bezogene verarbeitung der empfangenen Nutzdaten als auch eine zeitrichtige (d.h. mit der Basisstation synchronisierte) Erzeugung der zu sendenden Funksignale in der Mobilstation ermöglicht wird.

Aus dem Buch "Analyse und Entwurf digitaler Mobilfunksysteme" von P. Jung, Stuttgart, B.G. Teubner, 1997, Seite 236-237 ist bereits bekannt, die Zeitschlitzsynchronisation der Mobilstationen mittels sog. "Synchronization-Bursts" durchzuführen, die von den Basisstationen in regelmäßiger Wiederholung ausgesendet werden.

Bei CDMA-(Code Division Multiple Access)Systemen ist vorgeschlagen worden, zur Erzielung der Zeitschlitsynchronität einen Synchronisationskanal zu verwenden. Die Basisstation sendet in fortwährender Wiederholung pro Zeitschlitz genau eine Zeitschlitz-Synchronisationscodefolge in den Synchronisationskanal aus. Die Zeitschlitzdauer sowie die von der Basisstation ausgesendete Zeitschlitz-Synchronisationscodefolge sind der Mobilstation bekannt. Die Mobilstation erfaßt die zeitliche Lage der von der Basisstation verwendeten Zeitschlitzstruktur, indem sie die von einem beliebigen Anfangszeitpunkt an über eine Zeitschlitzdauer detektierten (rekonstruierten) Datenelemente der ausgesendeten Zeitschlitz-Synchronisationscodefolge mit sämtlichen zyklischen Verschiebungen dieser Zeitschlitz-Synchronisationscodefolge korreliert und dabei die (ggf. zyklisch verschobene) Zeitschlitz-Synchronisationscodefolge mit maximaler Korrelation bestimmt. Die zyklische Verschiebung der gefundenen Folge maximaler Korrelation ermöglicht die Zeitschlitz-Synchronisation in der Mobilstation.

Die beschriebene Zeitschlitzsynchronisation erfolgt innerhalb der Dauer eines Zeitschlitzes. Nachteilig an diesem Verfahren ist jedoch der hohe Speicherbedarf. Bei einer Anzahl von 5632 Abtastungen pro Zeitschlitzdauer mit einer Wortbreite von 8 Bit pro Inphasal- bzw. Quadratur-Zweig müssen für jeden Zeitschlitz 5632 x 8 x 2 Bits temporär gespeichert werden. Die hierfür benötigte Speichergröße von mehr als 5k x 16 Bit stellt bei Mobilfunkanwendungen einen wesentlichen Kostenfaktor dar.

In der Schrift US 5,883,929 ist ein Verfahren zum Synchronisieren eines Mobilfunkempfängers mit einer Basisstation beschrieben, bei welchem die Basisstation in bestimmten Zeitschlitzen von einzelnen Rahmen eine Synchronisationssequenz aussendet. Die Synchronisationssequenz weist eine Wiederholungsstruktur auf, welche ausgenutzt wird, um eine abschnittsweise Korrelationsprozedur nach dem Gleitfensterverfahren durchzuführen.

Die EP-A-0 789 467 offenbart die Merkmale nach dem Oberbegriff der Anspüche 1 und 6.

Der Erfindung liegt die Aufgabe zugrunde, ein Verfahren zur Zeitschlitz-Synchronisierung einer Mobilstation mit einer Basisstation anzugeben, das einen geringen Speicherplatzbedarf hat. Ferner zielt die Erfindung darauf ab, eine Einrichtung zur Zeitschlitz-Synchronisierung einer Mobilstation mit einer Basisstation mit geringem Speicherplatzbedarf zu schaffen.

Die Aufgabe wird durch die Merkmale der Patentansprüche 1 und 6 gelöst.

Dadurch, daß zur Korrelationsberechnung jeweils nur Teilabschnitte von Abtastwerten der detektierten Zeitschlitz-Synchronisationscodefolge (und nicht sämtliche Abtastwerte der detektierten Zeitschlitz-Synchronisationscodefolge) herangezogen werden, muß für jede Korrelationsberechnung auch nur dieser in der entsprechenden Zeitschlitzdauer aufgenommene Teilabschnitt von Abtastwerten in einem Speicher abgelegt werden. Dadurch verringert sich der Bedarf an Speicherplatz, gleichzeitig wird jedoch die "Meßzeit", die für die Bestimmung der zeitlichen Lage der empfangenen Zeitschlitze benötigt wird, auf mehrere (mindestens zwei) Zeitschlitzdauern verlängert.

Generell gilt, daß der Speicherplatzbedarf um so kleiner, die Meßzeit aber um so größer wird, je kürzer die den einzelnen Korrelationsberechnungen zugrunde liegenden detektierten Teilabschnitte von Abtastwerten der empfangenen Zeitschlitz-Synchronisationscodefolge (bei konstanter Anzahl von abgetasteten Teilabschnitten pro Zeitschlitzdauer) sind.

Eine bevorzugte Maßnahme des erfindungsgemäßen Verfahrens kennzeichnet sich dadurch, daß in der ersten und der späteren Zeitschlitzdauer jeweils mehrere detektierte Teilabschnitte von Abtastwerten der Zeitschlitz-Synchronisationscodefolge mit der im Empfänger bekannten Zeitschlitz-Synchronisationscodefolge korreliert werden.

Unter dem Gesichtspunkt der Speicherplatzökonomie ist es auch in diesem Fall zweckmäßig, daß die bezüglich einer Zeitschlitzdauer mehreren Teilabschnitte von Abtastwerten der detektierten Zeitschlitz-Synchronisationscodefolge im gleichen Datenspeicher jeweils unter Überschreiben des Speicherinhalts abgelegt werden. Dies setzt voraus, daß die Korrelationsberechnung auf der Grundlage eines Teilabschnitts von Abtastwerten der detektierten Zeitschlitz-Synchronisationscodefolge zu dem Zeitpunkt des Überschreibens des Speicherinhalts mit dem nächsten Teilabschnitt von Abtastwerten der detektierten Zeitschlitz-Synchronisationscodefolge bereits abgeschlossen ist.

Bei dem erfindungsgemäßen abschnittsweisen Abtast- und Korrelations-Berechnungsverfahren sei nach einer Rekursionszeitdauer von K Zeitschlitzdauern die gesamte detektierte Zeitschlitz-Synchronisationscodefolge berücksichtigt. Eine vorteilhafte Verfahrensvariante kennzeichnet sich dadurch, daß bezüglich gleicher Teilabschnitte von Abtastwerten eine Integration der über mehrere Rekursionszeitdauern erhaltenen Korrelationsergebnisse durchgeführt wird. Durch Verwendung des Integrationsergebnisses bei der Bestimmung der zeitlichen Zeitschlitzlage kann die Genauigkeit der erwähnten Bestimmung - auf Kosten der Meßzeit - ohne Vergrößerung des Speicherplatzbedarfes weiter erhöht werden.

Eine weitere vorteilhafte Variante des erfindungsgemäßen Verfahrens kennzeichnet sich dadurch, daß die Korrelationsergebnis-Daten komprimiert werden, und daß die zeitliche Zeitschlitzlage unter Verwendung der komprimierten Korrelationsergebnis-Daten bestimmt wird. Bei der Datenkompression wird die Datenmenge, die zur Darstellung eines einzelnen Korrelationsergebnisses (berechnet aus der Korrelation eines einzigen Teilabschnitts der detektierten Zeitschlitz-Synchronisationscodefolge mit der bekannten Zeitschlitz-Synchronisationcodefolge) benötigt wird, stark reduziert.

Bei der erfindungsgemäßen Einrichtung werden gemäß dem vorstehend beschriebenen Verfahren ebenfalls lediglich detektierte Teilabschnitte von Abtastwerten der empfangenen Zeitschlitz-Synchronisationscodefolge und nicht die Abtastwerte der gesamten detektierten Zeitschlitz-Synchronisationscodefolge mit der im Empfänger bekannten Zeitschlitz-Synchronisationscodefolge korreliert. Dadurch kann der Speicherumfang des Datenspeichers soweit verringert werden, daß er lediglich die Datenmenge eines einzelnen Teilabschnitts von Abtastwerten der detektierten Zeitschlitz-Synchronisationscodefolge abspeichern kann.

Die Erfindung wird nachfolgend anhand eines Ausführungsbeispiels unter Bezugnahme auf die Zeichnung beschrieben; in dieser zeigt:
- Fig. 1: eine schematische Darstellung der Luftschnittstelle eines Mobilfunksystems mit einer Mobilstation und mehreren Basisstationen;
- Fig. 2a: eine schematische Darstellung der Datenstruktur eines in dem Mobilfunksystem verwendeten Rahmens, der sich über eine Zeitdauer von N Zeitschlitzen erstreckt;
- Fig. 2b: eine schematische Darstellung eines Synchronisationskanals, in welchem die Aussendung einer Zeitschlitz-Synchronisationscodefolge am Ort einer Basisstation über der Zeit t aufgetragen ist; und
- Fig. 3: eine schematische Darstellung, in der die Anzahl der Abtastwerte der empfangenen Zeitschlitz-Synchronisationscodefolgen sowie die Zeitintervalle der Abtastungen über der Zeit t aufgetragen sind.

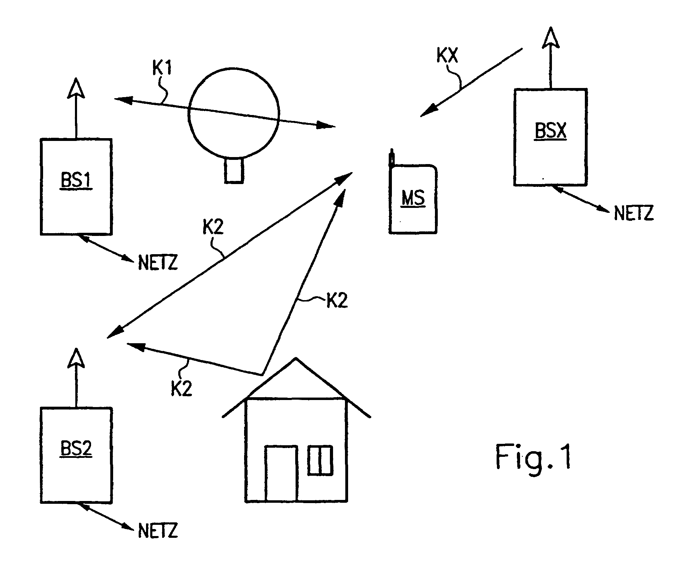

Fig. 1 zeigt in schematischer Darstellung die Luftschnittstelle eines zellularen Mobilfunksystems. Eine einem einzelnen Teilnehmer zugeordnete Mobilstation MS befindet sich im Funkbereich von mehreren Basisstationen BS1, BS2, .., BSX, .., die mit einem gemeinsamen Telekommunikationsnetz in Verbindung stehen. Die Kommunikationsverbindungen K1, K2, .., KX, .. zwischen den Basisstationen BS1, BS2, .., BSX, .. und der Mobilstation MS unterliegen einer Mehrwegeausbreitung.

Jede Basisstation BS1, BS2, .., BSX, .. steht mit einer Vielzahl weiterer Mobilstationen (nicht dargestellt) in Funkverbindung. Die über die Kommunikationsverbindungen K1, K2, .., KX, .. gesendeten Funksignale F sämtlicher Basisstationen weisen eine systemeinheitliche, d.h. konstruktiv identische Rahmenstruktur auf.

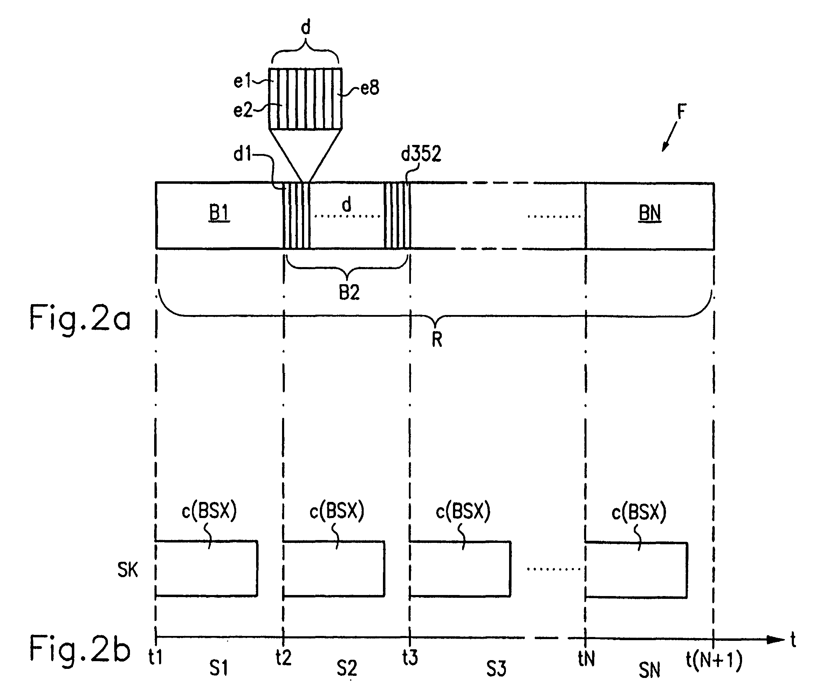

Fig. 2a zeigt ein Beispiel für eine solche Rahmenstruktur eines Funksignals F.

Das Funksignal (Nutzsignal) F besteht aus einer Abfolge von einzelnen Datensymbolen (Bits) d. Ein Datenblock B1; B2; ..; BN wird aus einer systemstandardspezifischen Anzahl von Datensymbolen d (hier beispielsweise 352 Datensymbolen) gebildet. Jeder Datenblock B1; B2; ..; BN wird innerhalb eines Zeitschlitzes ausgesendet (d.h. die Einteilung der Daten in Datenblöcke entspricht der Einteilung der Zeit in Zeitschlitze). Ein Rahmen R wird aus einer systemstandardspezifischen Anzahl N von Datenblöcken B1, B2, .., BN aufgebaut. Beispielsweise kann ein Rahmen R aus N = 16 Datenblöcken B1, B2, .., B16 aufgebaut sein und umfaßt im vorliegenden Beispiel dann 5632 Datensymbole d.

Dem in Fig. 2a dargestellten Beispiel liegt ein CDMA-Funksignal F zugrunde. Dies bedeutet, daß jedes Datensymbol d mit einem teilnehmerspezifischen Spreizcode (CDMA-Code) spreizcodiert ist. Der Spreizcode umfaßt pro Datensymbol d beispielsweise 8 Chips e1, e2, .., e8.

Der gesamte in Fig. 2a dargestellte Rahmen/Block/Datensymbol/Chip-Aufbau eines Funksignals F sowie die entsprechenden Rahmen/Zeitschlitz/Datensymbol/Chip-Zeitdauern sind systemspezifisch vorgegeben und für die gesendeten Funksignale F aller Basisstationen BSi, i = 1, 2, .. identisch.

Wenn im Zusammenhang mit einer Gesprächsauf- oder -übernahme (Handover) eine bidirektionale Kommunikationsverbindung KX zwischen der Mobilstation MS und einer bestimmten Basisstation BSX (üblicherweise derjenigen mit der größten Empfangssignalstärke an der Mobilstation MS) aufgebaut werden soll, muß die Mobilstation MS zuvor mit der Zeitschlitzstruktur des von der bestimmten Basisstation BSX erhaltenen Funksignals F synchronisiert werden, d.h. die Mobilstation MS muß in der Lage sein, Anfang und Ende eines erhaltenen Datenblocks B1, B2, .., BN zu erkennen.

Zur Erzielung der Zeitschlitzsynchronität wird ein für alle Basisstationen BSi gemeinsamer Synchronisationskanal SK verwendet (siehe Fig. 2b).

In den Synchronisationskanal SK sendet jede Basisstation BSi am Anfang eines jeden Basisstation-individuellen Zeitschlitzes eine Synchronisationscodefolge c(BSi) aus. Die von der Basisstation BSX ausgesendeten Synchronisationscodefolgen sind in Fig. 2b dargestellt und werden mit c(BSX) bezeichnet. Der erste Zeitschlitz S1 erstreckt sich von t1 bis t2, der zweite Zeitschlitz S2 erstreckt sich von t2 bis t3, .., und der N-te Zeitschlitz SN erstreckt sich von tN bis t(N+1).

Bei dem hier erläuterten Beispiel werde angenommen, daß die Zeitschlitz-Synchronisationscodefolge c(BSX) 2560 Datenelemente (Chips) umfaßt.

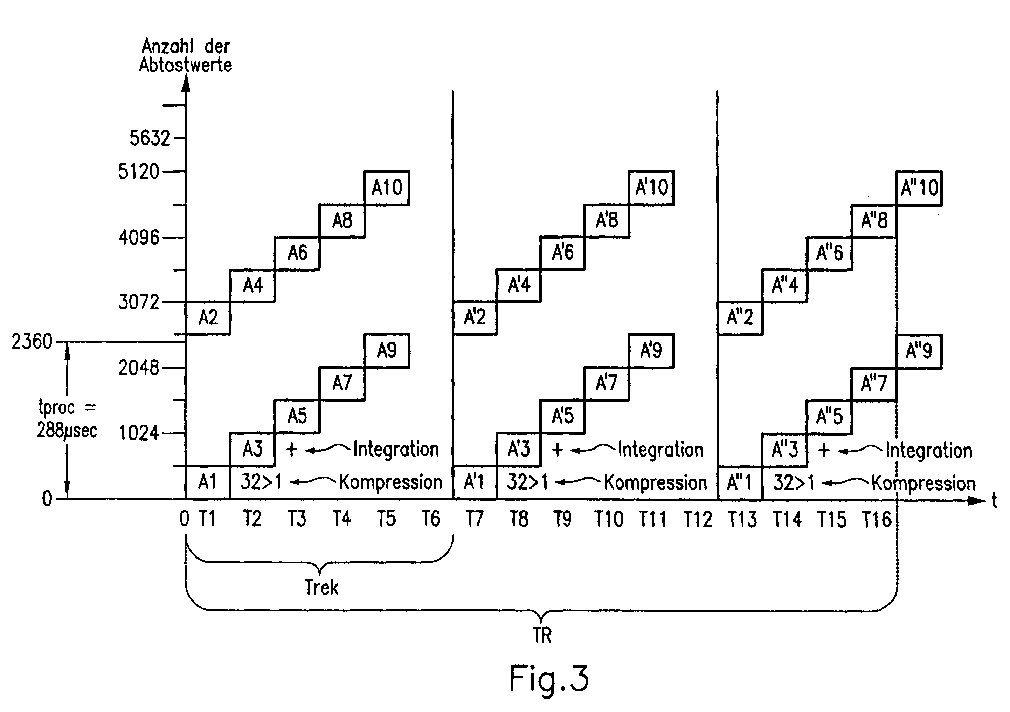

Ein spezielles Ausführungsbeispiel des erfindungsgemäßen Verfahrens wird im folgenden anhand der Fig. 3 näher erläutert.

Bei der Detektion einer Zeitschlitz-Synchronisationscodefolge c(BSX) im Empfänger MS wird ein im Synchronisationskanal SK empfangenes Signal mit zweifacher Überabtastung (d.h. 5632 Abtastwerten pro Zeitschlitzdauer) abgetastet und pro I- bzw. Q-Zweig ein Abtast-Datensignal einer Wortbreite von 8 Bit erzeugt.

Unter Berücksichtigung der zwei Empfangszweige wäre zur Speicherung der gesamten Zeitschlitz-Synchronisationscodefolge c(BSX) ein Speicher von mehr als 5k x 16 Bit erforderlich.

Gemäß dem in Fig. 3 gezeigten Beispiel wird die einer Zeitschlitz-Synchronisationscodefolge entsprechende Zeitdauer in zehn Zeitintervalle aufgeteilt. Jedes Zeitintervall entspricht damit einer Dauer von 256 Chips der Zeitschlitz-Synchronisationscodefolge c(BSX).

Erfindungsgemäß werden nun lediglich ein Teil der bei der Detektion der Zeitschlitz-Synchronisationscodefolgen c(BSX) erhaltenen Abtastwerte in einem Speicher abgespeichert und für die Korrelation mit der dem Empfänger MS bekannten Zeitschlitz-Synchronisationscodefolge c(BSX) herangezogen. Fig. 3 verdeutlicht das zeitliche Muster der Datenaufnahme bzw. -abspeicherung. Beginnend zu einem beliebigen Zeitpunkt t = 0, werden in einem ersten Zeitintervall zunächst 512 Abtastwerte (pro I/Q-Zweig) abgespeichert und damit ein erster Teilabschnitt A1 der empfangenen Zeitschlitz-Synchronisationscodefolge c(BSX) aufgezeichnet. Die Lage dieses Teilabschnitts innerhalb der Zeitschlitz-Synchronisationscodefolge c(BSX) ist zunächst natürlich nicht bekannt. Die in den folgenden vier Zeitintervallen erhaltenen Abtastwerte werden verworfen. Die im fünften Zeitintervall erhaltenen Abtastwerte werden als Teilabschnitt A2 der Zeitschlitz-Synchronisationscodefolge c(BSX) abgespeichert und die in den Zeitintervallen 6 bis 10 erhaltenen Abtastwerte werden wiederum verworfen.

In der nächsten Zeitschlitz-Zeitdauer T2 werden die in dem zweiten und dem sechsten Zeitintervall erhaltenen Abtastwerte als Teilabschnitte A3 und A4 der (nächsten) Zeitschlitz-Synchronisationscodefolge c(BSX) abgespeichert, während die in den restlichen Zeitintervallen erhaltenen Abtastwerte verworfen werden. Dieses Muster setzt sich wie in Fig. 3 gezeigt innerhalb der Zeitschlitz-Zeitdauern T3 bis T5 fort, d.h. in der n-ten Zeitschlitz-Zeitdauer Tn, n = 1, 2, .., 5 werden die in dem n-ten und dem n+5-ten Zeitintervall erhaltenen Abtastwerte abgespeichert.

Nach fünf Zeitschlitz-Zeitdauern T1 bis T5 ist die gesamte Zeitschlitz-Synchronisationscodefolge c(BSX) abschnittsweise vollständig abgetastet.

Unmittelbar mit Beginn des Erhalts der Abtastwerte eines Teilabschnitts (z.B. Al) wird eine Korrelationsberechnung dieser Abtastwerte mit der im Mobilfunkempfänger MS bekannten Zeitschlitz-Synchronisationscodefolge c(BSX) durchgeführt. Die Korrelationsberechnung wird innerhalb einer Berechnungszeitdauer tproc abgeschlossen. In dem in Fig. 3 dargestellten Beispiel ist die Berechnungszeitdauer tproc = 288 µsec und somit kürzer als fünf Intervallzeitdauern. Damit ist die Berechnung eines ersten Korrelationsergebnisses bezüglich der Abtastwerte des ersten Teilabschnitts A1 bei Erhalt der Abtastwerte des zweiten Teilabschnitts A2 bereits abgeschlossen. Die Abtastwerte des ersten Teilabschnitts A1 können demzufolge durch die Abtastwerte des zweiten Teilabschnitts A2 überschrieben werden. Analoges gilt für die in den weiteren Teilabschnitten A3, A4, .., A10 erhaltenen Abtastwerte.

Da bei jeder Abspeicherung die im vorherigen Teilabschnitt erhaltenen Abtastwerte durch neue Abtastwerte überschrieben werden können und jeder Teilabschnitt eine Anzahl von 512 Abtastwerten umfaßt, reicht eine Speichergröße von etwas mehr als 0,5k x 16 Bit als Eingangsdatenspeicher aus. Die Größe des Eingangsdatenspeichers reduziert sich somit um den Faktor 10 im Vergleich zu dem Fall, daß sämtliche Abtastwerte einer Zeitschlitz-Synchronisationscodefolge c(BSX) in diesem abgespeichert werden müssen.

In der Zeitschlitz-Zeitdauer T6 findet keine Abspeicherung von Abtastwerten statt. Während T6 wird die Korrelationsberechnung bezüglich des Teilabschnitts A10 durchgeführt.

Bei dem anhand Fig. 3 erläuterten Verfahrensbeispiel wird die Korrelation der Abtastwerte einer einzigen Zeitschlitz-Synchronisationscodefolge c(BSX) über sechs Zeitschlitzdauern T1 bis T6 ausgedehnt. Die Genauigkeit (Statistik) der Gesamtkorrelation entspricht daher erst nach sechs Zeitschlitzdauern T1 bis T6 der Genauigkeit, die bei Verwendung sämtlicher Abtastwerte bereits in der ersten Zeitschlitzdauer T1 hätte erhalten werden können. Vorteilhaft ist jedoch - wie bereits erwähnt - der wesentlich geringere Speicherbedarf beim erfindungsgemäßen Verfahrensablauf.

Es wird darauf hingewiesen, daß es für die Erfindung nicht notwendigerweise erforderlich ist, daß tproc kleiner ist als die Zeitdauer zwischen dem Beginn des ersten Zeitintervalls, in dem die Abtastwerte des ersten Teilabschnitts A1 detektiert werden, und dem Beginn desjenigen nächsten Zeintintervalls, in dem die Abtastwerte des unmittelbar folgenden Teilabschnitts A2 detektiert werden. Ist diese Bedingung nicht erfüllt, müssen die Abtastwerte des nächsten Teilabschnitts (A2) in einen weiteren Speicherbereich geschrieben werden. Die Überschreibung des ersten Speicherbereichs, die nach Ablauf der Berechnungszeit tproc erfolgen kann, wird dann zu einem späteren Zeitpunkt, beispielsweise durch die Abtastwerte des übernächsten Teilabschnitts (A3), vorgenommen.

Die Berechnung der Korrelationsergebnisse der einzelnen Teilabschnitte A1, A2, ... mit der Zeitschlitz-Synchronisationscodefolge c(BSX) wird in an sich bekannter Weise mittels eines Korrelators durchgeführt. Der Korrelator "vergleicht" die 512 erhaltenen Abtastwerte des detektierten Teilabschnitts mit sämtlichen zyklisch um jeweils ein Datenelement (Chip) verschobenen Sequenzen gleicher Länge der Zeitschlitz-Synchronisationscodefolge c(BSX). Anschaulich gesprochen wird der detektierte Teilabschnitt bestehend aus den 512 erhaltenen Abtastwerten so lange über die Zeitschlitz-Synchronisationscodefolge c(BSX) hinweggeschoben, bis in dieser eine "passende" Sequenz mit einer ähnlichen (bei Vernachlässigung von Übertragungs-, Detektions- und Decodierungsfehlern theoretisch identischen) Abfolge von Werten in der Zeitschlitz-Synchronisationscodefolge c(BSX) gefunden wird. Die Lage dieser korrelierenden Wertesequenz innerhalb der bekannten Zeitschlitz-Synchronisationscodefolge c(BSX) bestimmt den zeitlichen Abstand zwischen t = 0 (d.h. dem zunächst beliebigen Anfangszeitpunkt der in Fig. 3 erläuterten Abtastwertegewinnung) und der zeitlichen Lage der am Empfänger auftretenden Zeitschlitze des empfangenen Funksignals F. Letztere entspricht den (um die Signallaufzeit verschobenen) Anfangszeitpunkten t1, t2, .., tN der Zeitschlitze S1, S2, .., SN gemäß der Darstellung in Fig. 2b.

Die Kenntnis dieses zeitlichen Abstands ermöglicht die Zeitschlitzsynchronisierung der Mobilstation MS mit der Basisstation BSX. Anschaulich kann man sich die Synchronisierung so vorstellen, daß durch eine Verschiebung des beliebigen Abtast-Anfangszeitpunktes t = 0 um den ermittelten zeitlichen Abstand gewährleistet wird, daß der neue Abtast-Anfangszeitpunkt t = 0 auf den Beginn eines Zeitschlitzes fällt.

Aus Fig. 3 wird deutlich, daß sich in dem hier dargestellten Beispiel nach jeweils K = 6 Zeitschlitz-Zeitdauern der Meßablauf wiederholt. Die Zeitdauer, nach der sich der Meßablauf wiederholt, wird als Rekursionszeit Trek bezeichnet. Zur Verbesserung der Korrelations-Statistik können die bezüglich einander entsprechender Teilabschnitte An, A'n, A''n, n = 1, 2, .., 10 erhaltenen Korrelationsergebnisse über mehrere Rekursionen des Meßablaufs integriert bzw. gemittelt werden. Die Bestimmung der Zeitschlitzlage erfolgt dann anhand der integrierten (gemittelten) Korrelationsergebnisse, d.h. frühestens nach 2 Trek.

Eine andere bevorzugte Möglichkeit besteht darin, die auf der Basis der einzelnen Teilabschnitte A1, A2, ... erhaltenen Korrelationsergebnis-Daten vor der Weiterverarbeitung (insbesondere der vorstehend angesprochenen Integration/Mittelung) zu komprimieren. Dadurch kann das Datenvolumen der einzelnen Korrelationsergebnisse wesentlich (beispielsweise um den Faktor 32) reduziert werden.

Es wird darauf hingewiesen, daß die Rahmenzeitdauer TR (hier N = 16 Zeitschlitze lang) nicht kommensurabel mit der Rekursionszeitdauer Trek (hier: K = 6 Zeitschlitze lang) sein muß.

## Patentansprüche

1. Verfahren zum Synchronisieren eines Mobilfunkempfängers mit einer Zeitschlitzstruktur eines von einer Basisstation (BSX) erhaltenen Funksignals, wobei
- die Basisstation (BSX) pro Zeitschlitz (S1, S2, .., SN) einen in dem Mobilfunkempfänger (MS) bekannten Zeitschlitz-Synchronisationscode (c(BSX)) bestehend aus einer vorgegebenen Folge von Datenelementen aussendet; **dadurch gekennzeichnet, daß**
- in dem Mobilfunkempfänger (MS)
-- mindestens ein während einer ersten Zeitschlitzdauer (T1) detektierter erster Teilabschnitt (A1) von Abtastwerten der empfangenen Zeitschlitz-Synchronisationscodefolge (c(BSX)) mit der bekannten Zeitschlitz-Synchronisationscodefolge (c(BSX)) korreliert wird;
-- mindestens ein während einer späteren Zeitschlitzdauer (T2) detektierter zweiter Teilabschnitt (A3) von Abtastwerten der empfangenen Zeitschlitz-Synchronisationscodefolge (c(BSX)) mit der bekannten Zeitschlitz-Synchronisationscodefolge (c(BSX)) korreliert wird, wobei die ersten und zweiten Teilabschnitte von Abtastwerten unterschiedlich sind; und
-- aus den bei den Korrelationen erhaltenen Korrelationsergebnissen die zeitliche Zeitschlitzlage (t1, t2, .., tN) am Mobilfunkempfänger (MS) bestimmt wird.

2. Verfahren nach Anspruch 1,
**dadurch gekennzeichnet,**
- **daß** in der ersten und der späteren Zeitschlitzdauer (T1, T2) jeweils mehrere detektierte Teilabschnitte (A1, A2; A3, A4) von Abtastwerten der empfangenen Zeitschlitz-Synchronisationscodefolge (c(BSX)) mit der im Mobilfunkempfänger (MS) bekannten Zeitschlitz-Synchronisationscodefolge (c(BSX)) korreliert werden.

3. Verfahren nach Anspruch 2,
**dadurch gekennzeichnet,**
- **daß** die bezüglich einer Zeitschlitzdauer (T1; T2; ..; T5) mehreren Teilabschnitte (A1, A2; A3, A4; ..; A8, A9) von Abtastwerten der detektierten Zeitschlitz-Synchronisationscodefolge (c(BSX)) im gleichen Datenspeicher unter Überschreiben des Speicherinhalts abgelegt werden.

4. Verfahren nach einem der vorhergehenden Ansprüche,
**dadurch gekennzeichnet,**
- **daß** nach einer Rekursionszeitdauer (Trek) von K Zeitschlitzdauern (T1, T2, ..., T6) wieder die gleichen ersten und zweiten Teilabschnitte (A1, A'1; A2, A'2) von Abtastwerten der detektierten Zeitschlitz-Synchronisationscodefolge (c(BSX)) mit der im Mobilfunkempfänger (MS) bekannten Zeitschlitz-Synchronisationscodefolge (c(BSX)) korreliert werden;
- **daß** bezüglich gleicher Teilabschnitte (A1, A'1; A2, A'2) von Abtastwerten eine Integration der erhaltenen Korrelationsergebnisse über mehrere Rekursionszeitdauern (Trek) durchgeführt wird; und
- **daß** die zeitliche Zeitschlitzlage (t1, t2, .., tN) unter Verwendung der Intergrationsergebnisse bestimmt wird.

5. Verfahren nach einem der vorhergehenden Ansprüche,
**dadurch gekennzeichnet,**
- **daß** die Korrelationsergebnis-Daten komprimiert werden; und
- **daß** die zeitliche Zeitschlitzlage (t1, t2, .., tN) unter Verwendung der komprimierten Korrelationsergebnis-Daten bestimmt wird.

6. Einrichtung zum Synchronisieren eines Mobilfunkempfängers mit einer Zeitschlitzstruktur eines von einer Basisstation (BSX) erhaltenen Funksignals, wobei
- die Basisstation (BSX) pro Zeitschlitz (S1, S2, .., SN) einen in dem Mobilfunkempfänger (MS) bekannten Zeitschlitz-Synchronisationscode (c(BSX)) bestehend aus einer vorgegebenen Folge von Datenelementen aussendet **dadurch gekennzeichnet, daß** mit:
- einem Datenspeicher, in welchem detektierte Teilabschnitte (A1, A2, .., A10) von Abtastwerten der empfangenen Zeitschlitz-Synchronisationscodefolge (c(BSX)) abgespeichert werden,
- einem Korrelator, mittels welchem einzelne abgespeicherte Teilabschnitte (A1, A2, .., A10) von Abtastwerten der detektierten Zeitschlitz-Synchronisationscodefolge (c(BSX)) mit der bekannten Zeitschlitz-Synchronisationscodefolge (c(BSX)) korreliert werden, wobei in aufeinander folgenden Zeitschlitzdauern (T1, T2) unterschiedliche Teilabschnitte (A1, A2) von Abtastwerten verarbeitet werden, und
- einer Zeitschlitzzeitlage-Ermittlungseinrichtung, die aus den bezüglich der einzelnen Teilabschnitte (A1, A2, .., A10) von Abtastwerten gewonnenen Korrelationsergebnissen die zeitliche Lage der Zeitschlitzstruktur (t1, t2, .., tN) des von der bestimmten Basisstation (BSX) erhaltenen Funksignals (F) im Mobilfunkempfänger (MS) ermittelt.

7. Einrichtung nach Anspruch 6,
**dadurch gekennzeichnet,**
- **daß** der Datenspeicher eine Speichergröße aufweist, die im wesentlichen der in einem Teilabschnitt (A1; A2; ..; A10) von Abtastwerten enthaltenen Datenmenge entspricht.

## Claims

1. Method for synchronizing a mobile radio receiver with a time slot structure of a radio signal obtained from a base station (BSX), in which
- the base station (BSX) sends out per time slot (S1, S2, .., SN) a time slot synchronization code (C(BSX)) consisting of a predetermined sequence of data elements, which is known in the mobile radio receiver (MS); **characterized in that**
- in the mobile radio receiver (MS)
-- at least one first part-section (A1), detected during a first time slot period (T1), of samples of the received time slot synchronization code sequence (c(BSX)) is correlated with the known time slot synchronization code sequence (c(BSX));
-- at least one second part-section (A3), detected during a later time slot period (T2), of samples of the received time slot synchronization code sequence (c(BSX)) is correlated with the known time slot synchronization code sequence (c(BSX)), the first and second part-sections of samples being different; and
-- the time slot position (t1, t2, ..., tN) in time is determined at the mobile radio receiver (MS) from the correlation results obtained during the correlations.

2. Method according to Claim 1, **characterized in that**
- in each case a number of detected part-sections (A1, A2; A3, A4) of samples of the received time slot synchronization code sequence (c(BSX)) are correlated with the time slot synchronization code sequence (c(BSX)) known in the mobile radio receiver (MS) with in the first and the later time slot period (T1, T2).

3. Method according to Claim 2, **characterized in that**
- the several part-sections (A1, A2; A3, A4; ..; A8, A9) of samples of the detected time slot synchronization code sequence (c(BSX)) with respect to a time slot period (T1; T2; ..; T5) are stored in the same data memory by overwriting the memory content.

4. Method according to one of the preceding claims, **characterized in that**
- after a recursion period (Trek) of K time slot periods (T1, T2, ..., T6), the same first and second part-sections (A1, A'1; A2, A'2) of samples of the detected time slot synchronization code sequence (c(BSX)) are again correlated with the time slot synchronization code sequence (c(BSX)) known in the mobile radio receiver (MS);
- that an integration of the correlation results obtained is performed over a number of recursion periods (Trek) with respect to equal part-sections (A1, A'1; A2, A'2) of samples; and
- that the time slot position (t1, t2, .., tN) in time is determined by using the integration results.

5. Method according to one of the preceding claims, **characterized in that**
- the correlation result data are compressed; and
- that the time slot position (t1, t2, ..., tN) in time is determined by using the compressed correlation result data.

6. Device for synchronizing a mobile radio receiver with a time slot structure of a radio signal obtained from a base station (BSX), in which
- the base station (BSX) sends out per time slot (S1, S2, .., SN), a time slot synchronization code (c(BSX)) consisting of a predetermined sequence of data elements which is known in the mobile radio receiver (MS), **characterized in that** comprising:
- a data memory in which detected part-sections (A1, A2, .., A10) of samples of the received time slot synchronization code sequence (c(BSX)) are stored,
- a correlator by means of which individual stored part-sections (A1, A2, .., A10) of samples of the detected time slot synchronization code sequence (c(BSX)) are correlated with the known time slot synchronization code sequence (c(BSX)), different part-sections (A1, A2) of samples being processed in successive time slot periods (T1, T2), and
- a time slot position determining device which determines from the correlation results obtained with respect to the individual part-sections (A1, A2, .., A10) of samples the position of the time slot structure (t1, t2, .., tN) in time of the radio signal (F) obtained from the particular base station (BSX) in the mobile radio receiver (MS).

7. Device according to Claim 6, **characterized in that**
- the data memory has a memory size which essentially corresponds to the data volume contained in a part-section (A1; A2; .., A10) of samples.

## Revendications

1. Procédé de synchronisation d'un récepteur radio mobile par une structure de créneau temporel d'un signal radio obtenu depuis une station (BSX) de base, dans lequel
- la station (BSX) de base émet par créneau temporel (S1, S2..., SN) un code (c(BSX)) de synchronisation de créneau temporel connu dans le récepteur (MS) radio mobile,
**caractérisé en ce que**
- dans le récepteur (MS) radio mobile
-- au moins une première sous-section (A1), détectée pendant une première durée (T1) de créneau temporel, de valeurs d'échantillonnage de la succession (c(BSX)) de code de synchronisation de créneau temporel reçue est corrélée à la succession (c(BSX)) de code de synchronisation de créneau temporel connue ;
-- au moins une deuxième sous-section (A3), détectée pendant une durée (T2) ultérieure de créneau temporel, de valeurs d'échantillonnage de la succession (c(BSX)) de code de synchronisation de créneau temporel reçue est corrélée à la succession (c(BSX)) de code de synchronisation de créneau temporel connue, les première et deuxième sous-sections de valeurs d'échantillonnage étant différentes,
-- on détermine la position (t1, t2,...,tN) du créneau temporel dans le temps sur le récepteur (MS) radio mobile, à partir des résultats de corrélation obtenus pour les corrélations.

2. Procédé suivant la revendication 1,
**caractérisé**
- **en ce que** dans la première durée (T1) de créneau temporel et dans la durée (T2) ultérieure de créneau temporel, on corrèle successivement plusieurs sous-sections (A1, A2, A3, A4) détectées de valeurs d'échantillonnage de la succession (c(BSX)) de code de synchronisation de créneau temporel reçue à la succession (c(BSX)) de code de synchronisation de créneau temporel connue dans le récepteur (MS) radio mobile.

3. Procédé suivant la revendication 2,
**caractérisé**
**en ce que** l'on mémorise dans la même mémoire de données en écrasant le contenu de la mémoire les plusieurs, par rapport à une durée (T1, T2,...T5) de créneau temporel, sous-sections (A1, A2, A3 ;.A8,...A8, A9) de valeurs d'échantillonnage de la succession (c(BSX)) de code de synchronisation de créneau temporel détectée.

4. Procédé suivant l'une des revendications précédentes,
**caractérisé**
- **en ce qu'**après une durée (Trek) de récursion de K durées (T1, T2,...T6) de créneau temporel, on corrèle à nouveau les mêmes première et deuxième sous-sections (A1, A'1, A2, A'2) de valeurs d'échantillonnage de la succession (c(BSX)) de code de synchronisation de créneau temporel détectée avec la succession (c(BSX)) de code de synchronisation de créneau temporel connue dans le récepteur (MS) radio mobile ;
- on effectue, pour ce qui concerne les mêmes sous-sections (A1, A'1, A2, A'2) de valeur d'échantillonnage, une intégration des résultats de corrélation obtenus sur plusieurs durées (Trek) de récursion ;
- on détermine la position (t1, t2,...tN) de créneau temporel dans le temps en utilisant les résultats de l'intégration.

5. Procédé suivant l'une des revendications précédentes,
**caractérisé**
- **en ce que** l'on compresse les données de résultats de corrélation, et
- **en ce que** l'on détermine la position (t1, t2,...tN) de créneau temporel dans le temps en utilisant les données de résultats de corrélation compressée.

6. Dispositif de synchronisation d'un récepteur radio mobile par une structure de créneau temporel d'un signal radio obtenu à partir d'une station (BSX) de base, dans lequel
- la station (BSX) de base émet par créneau temporel (S1, S2,...SN) un code (c(BSX)) de synchronisation de créneau temporel, connu dans le récepteur (MS) radio mobile, constitué d'une succession prescrite d'éléments de données, **caractérisé par**
- une mémoire de données dans laquelle des sous-sections (A1, A2,...A10) détectées de valeurs d'échantillonnage de la succession (c(BSX)) de code de synchronisation de créneau temporel reçus sont mémorisées,
- un corrélateur au moyen duquel des sous-sections (A1, A2,...A10) mémorisées de valeurs de mesure de la succession (c(BSX) de code de synchronisation de créneau temporel détectée sont corrélées à la succession (c(BSX)) de code de synchronisation de créneau temporel connue des sous-sections (A1, A2) de valeurs de mesure différentes étant traitées dans des durées (T1, T2) de créneau temporel qui se succèdent et,
- un dispositif de détermination de la position du créneau temporel dans le temps qui, à partir des résultats de corrélation obtenus en ce qui concerne les diverses sous-sections (A1, A2, A10) de valeurs de mesure, détermine la position dans le temps de la structure (t1, t2,...tN) de créneau temporel du signal (F) radio dans le récepteur (MS) radio mobile obtenu à partir de la station (BSX) de base déterminée.

7. Dispositif suivant la revendication 6,
**caractérisé**
- **en ce que** la mémoire de données a une dimension qui correspond sensiblement à la quantité de données contenue dans une sous-section (A1, A2...A10) de valeurs d'échantillonnage.
